# EUROPEAN PATENT APPLICATION

(11) **EP 4 711 696 A1**
(43) Date of publication of application: **18.03.2026**
(21) Application number: 25200033.6
(22) Date of filing: 03.09.2025
(51) Int. Cl.: F28D 1/053, F28F 9/04, B33Y 80/00, B23P 5/00, B23P 15/26, B64D 13/00, F02C 7/141, B33Y 10/00

(54) **METHOD OF MAKING HEAT EXCHANGER**

(30) Priority: 16.09.2024 US 202418886695
(71) Applicant: RTX Corporation, Farmington, CT 06032 (US)
(72) Inventor: CALDWELL, Dustin D., Portland, 06480 (US); SNYDER, Jacob C., East Haddam, 06423 (US); SOBANSKI, Jon Erik, Glastonbury, 06033 (US)
(74) Representative: Dehns

(57) **Abstract**

A method of forming a heat exchanger includes the steps of forming an inlet header (102) having a hollow interior formed by a wall, forming heat transfer tubes (108) of a diameter smaller than a diameter of the inlet header (102) and extending away from the inner wall of the inlet header (102), the heat transfer tubes (108) having a hollow interior, with the hollow interior of the inlet header (102) being blocked from communication with the hollow interior of the heat transfer tubes (108), forming an outlet header having a hollow interior formed by a wall, the outlet header formed at an opposed end of the inlet header (102), and the hollow interior of the outlet header being in communication with the hollow interior of the heat transfer tubes (108), cutting access opening through the wall of the inlet header (102) at a location opposed to the heat transfer tubes (108), and cutting through an opposed side of the wall of the inlet header (102) to form orifices (140) to communicate the interior of the inlet header (102) to the interior of the heat transfer tubes (108), then closing the access openings. A heat exchanger arrangement is also disclosed.

## Description

### BACKGROUND

This application relates to a method of heat exchanger, and a heat exchanger made by that method.

Heat exchangers are utilized in many applications. One application is in a gas turbine engine. Gas turbine engines utilize any number of heat exchangers to transfer heat between two fluids.

Recently it has been proposed to use additive manufacturing to form a heat exchanger. However, there are limitations on the ability of additive manufacturing to accurately form certain structures.

One type of known heat exchanger is a micro-channel heat exchanger. In such a heat exchangers, passages which receive one of the two fluids have a small diameter.

### SUMMARY

In one aspect, there is provided a method of forming a heat exchanger includes the steps of forming an inlet header having a hollow interior formed by a wall, forming heat transfer tubes of a diameter smaller than a diameter of the inlet header and extending away from the inner wall of the inlet header, the heat transfer tubes having a hollow interior, with the hollow interior of the inlet header being blocked from communication with the hollow interior of the heat transfer tubes, forming an outlet header having a hollow interior formed by a wall, the outlet header formed at an opposed end of the inlet header, and the hollow interior of the outlet header being in communication with the hollow interior of the heat transfer tubes, cutting access opening through the wall of the inlet header at a location opposed to the heat transfer tubes, and cutting through an opposed side of the wall of the inlet header to form orifices to communicate the interior of the inlet header to the interior of the heat transfer tubes, then closing the access openings.

In example according to the above, the cutting step is provided by laser drilling.

In another embodiment according to any of the above, the cutting is performed by a water jet.

In another example according to any of the above, the cutting is provided by electro-discharge machining.

In another example according to any of the above, the cutting is performed by mechanical machining.

In another example according to any of the above, there are a plurality of inlet headers communicating with an inlet tube to receive a fluid, and a plurality of outlet headers communicating to an outlet tube.

In another example according to any of the above, the inlet header is provided with additional material to facilitate the cutting through of the access holes.

In another example according to any of the above, the access holes are closed using welding, the additional material provided by a plurality of bosses, and the bosses providing the melt pool to fill the access holes.

In another example according to any of the above, the heat exchanger is a micro-channel heat exchanger.

In another example according to any of the above, the orifices have a diameter smaller than the diameter of the heat transfer tubes such that there is material blocking a portion of the heat transfer tubes from communicating with the interior of the inlet header and the outlet header.

In another example according to any of the above, the inlet header, the heat transfer tubes and the outlet header are formed as a single part.

In another example according to any of the above, the single part is formed by additive manufacturing.

In another example according to any of the above, the inlet header, the heat transfer tubes and the outlet header are formed as a single part, wherein the single part is formed by additive manufacturing.

In another aspect, there is provided a heat exchanger arrangement that includes an inlet header having a hollow interior defined by a wall. A plurality of heat transfer tubes has a hollow interior and extend away from the inlet header. An orifice communicates the inlet header interior to the interior of the heat transfer tubes. An outlet header has a hollow interior formed by a wall and an orifice communicates the hollow interior of outlet header to the heat transfer tubes. A diameter of the orifices is smaller than a diameter of the heat transfer tubes such that a portion of the heat transfer tube interior is blocked from communicating with the interior of the inlet header and the outlet header.

In another example according to any of the above, there are a plurality of the inlet headers each communicating with a plurality of heat transfer tubes.

In another example according to any of the above, the heat transfer tubes communicate with a plurality of the outlet headers at ends spaced from the inlet headers.

In another example according to any of the above, the inlet header is adapted to be connected to receive a fluid to be heated.

In another example according to any of the above, the fluid to be heated is compressed water.

In another example according to any of the above, the outlet header is connected to a use of the heated compressed water as steam, and the use is in a combustor of a gas turbine engine.

In another example according to any of the above, the inlet header, the outlet header and the heat exchanger tubes are formed as a single piece by additive manufacturing.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a heat exchanger.
Figure 2B is a view generally along line B-B of Figure 2A.
Figure 3 schematically shows a formation of the heat exchanger utilizing additive manufacturing.
Figure 4 shows an intermediate product formed by a method according to this disclosure.
Figure 5 shows a step subsequent to the Figure 4 intermediate product.
Figure 6 shows a step subsequent to the Figure 5 step.
Figure 7 shows a portion of a final heat exchanger.
Figure 8A shows fluid flowing through the Figure 7 heat exchanger.
Figure 8B shows a relative diameter of a tube and an orifice into the tube.

### DETAILED DESCRIPTION

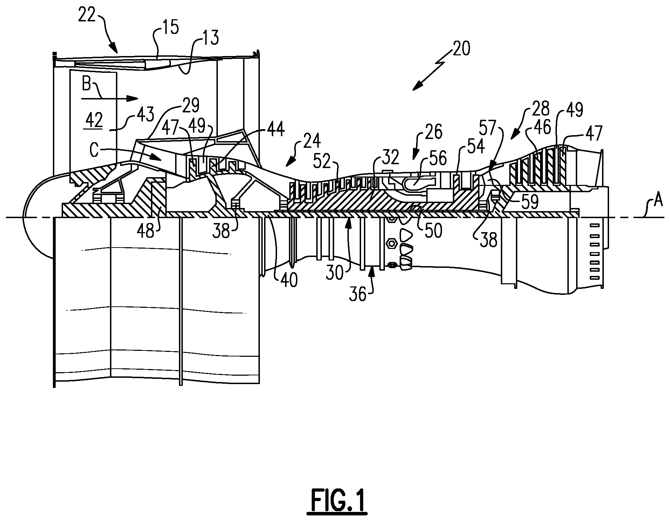

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

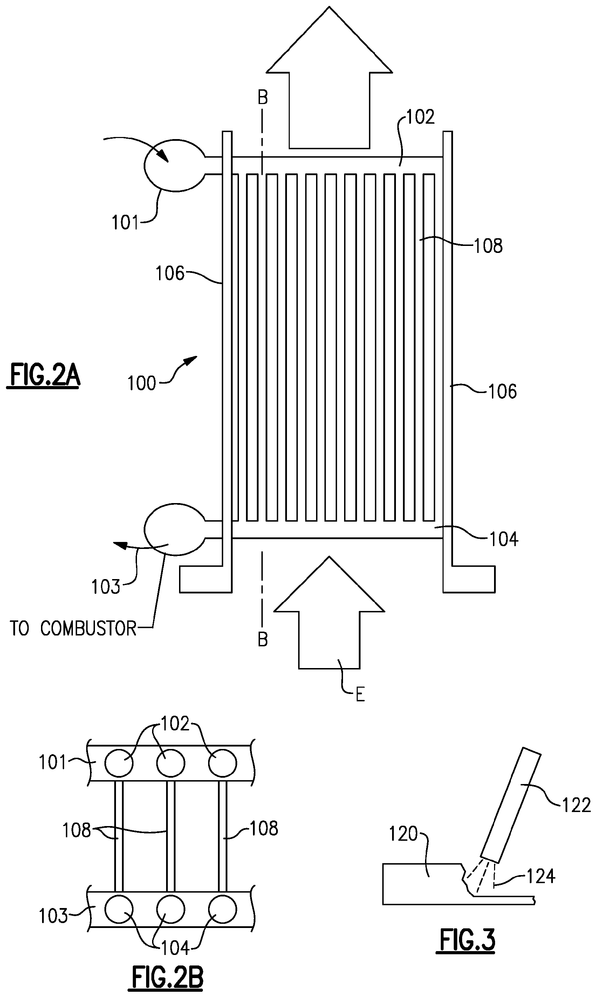

Figure 2A shows a heat exchanger 100 which may be utilized in an engine such as the engine of Figure 1. A supply tube 101 receives a first fluid and communicates it into a plurality of inlet header tubes 102. Fairings 106 provide a frame for the heat exchanger 100. An outlet header 104 communicates with a tube 103 to move the fluid downstream of the heat exchanger to a use. Heat transfer tubes 108 extend between inlet headers 102 and the outlet headers 104.

In this application the supply tube 101 may receive compressed water. The compressed water may come from a pump, fed by an onboard tank or a water recovery system. The water communicates into the inlet headers 102 and through the tubes 108. At the same time, a hot fluid, such as exhaust gas E passes across the heat transfer tubes 108. Thus, by the time the compressed water reaches outlet header 104, steam is being delivered into the tube 103.

In one application the steam can be delivered into a combustor of the gas turbine engine to facilitate combustion. However, it should be understood that the teachings of this disclosure would extend to heat exchangers utilized in any number of other applications.

Figure 2B shows a feature of the heat exchanger 100. As shown, the inlet tube 101 feeds a plurality of inlet headers 102. Similarly, a plurality of outlet headers 104 communicate with an outlet tube 103.

Figure 3 schematically shows a method of forming the heat exchanger 100. An intermediate part 120 is shown. An additive manufacturing machine 122 is shown placing material 124 to further form the intermediate part 120. This is a schematic representation; any number of additive manufacturing techniques can be utilized.

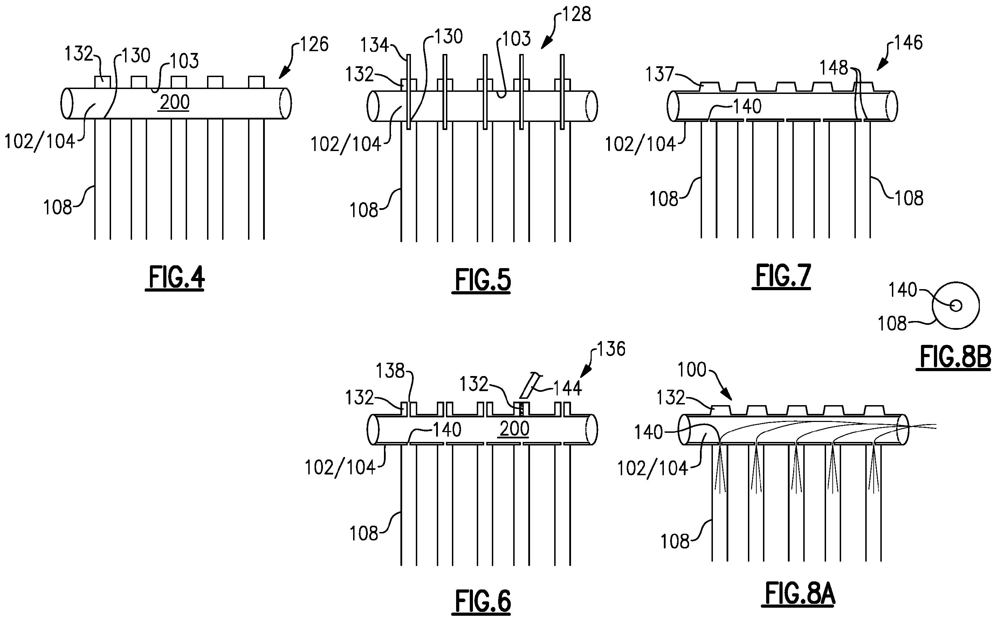

Figure 4 shows a portion of a formed intermediate product 126. The inlet header 102 is shown having a boss 132 formed at a side of the header 102 remote from the tubes 108. The inlet header 102 further has material 130 blocking communication between an interior 200 of the header 102 and the tube 108. The interior 200 is defined by wall 103. The same structure exists at outlet header 104.

Applicant recognizes that in order to achieve a desired pressure drop across the heat exchanger 100 one must very accurately form an orifice size to communicate the inlet header 102 and outlet header 104 to the tubes 108.

Thus, as shown in Figure 5, a cutting tool 134 is shown cutting through the bosses 132 and through the material 130 through wall 103. Any tool 134 capable of forming a very precise orifice size can be utilized. As an example, laser drill, water jet drill, electro-discharge machining, or other types of accurate machining can be utilized.

Now, as shown in Figure 6, there is an opening 138 through the boss 132 and an orifice 140 which now communicates the interior 200 of the inlet headers 102 and outlet headers 104 to the tubes 108. The orifice is very accurately sized. In another embodiment the outlet header may be formed within two orifices initially. Applicant has recognized that forming the orifice 140 to very tight tolerances is difficult with additive manufacturing. Thus, this disclosure facilitates the careful control of the size of the orifice 140. A further step is shown with tool 144 filling in the hole 138. This may be done by welding, such as automated spot or fusion welding. The boss itself provides the melt pool to file in the hole. The boss 132 preferably is tall enough to move the heat away from a wall of header 104. In embodiments it may be at least as tall as a thickness of the wall.

Now, as shown in Figure 7, a final part 146 has closed bosses 137 and accurately formed orifices 140.

As shown in Figure 8A flow is shown moving from the headers 102 into the tubes 108 through the orifices 140 and into outlet headers 104 through orifices 140.

Figure 8B shows a feature wherein the orifice 140 has a diameter that is smaller than the diameter of tube 108. Thus, as shown at 148 in Figure 7 the tubes 108 are partially closed off by material 148.

This provides a pressure drop at the introduction of the fluid to maintain equal flow throughout the heat exchanger. In one embodiment, the orifice diameter may be very small and less than .010 inch (0.254 mm) and greater than .005 inch (0.127 mm), as examples. Of course, dependent on the size of the overall structure the orifice size could be larger or smaller. In one design feature, the size of the orifice may be selected to achieve a pressure drop that is equal to the required pressure drop to prevent flow maldistribution across parallel tubes 108.

The heat exchanger as illustrated in this application is a micro-channel heat exchanger. However, it should be understood that teachings of this disclosure would benefit many other types of heat exchangers having multi-channel designs. It is especially beneficial for heat exchangers that have a phase change within the system where maldistribution can cause performance issues.

A method of forming a heat exchanger under this disclosure could be said to include the steps of forming an inlet header having a hollow interior formed by an inner wall, and exterior bosses. Heat transfer tubes are formed of a diameter smaller than a diameter of the inlet header and extend away from the inner wall of the inlet header, aligned with the exterior bosses of the inlet header. The heat transfer tubes have a hollow interior, with the hollow interior of the inlet header blocked from communication with the hollow interior of the heat transfer tubes. An outlet header is formed having a hollow interior formed by an inner wall. The outlet header is formed at an opposed end of the inlet header, and the hollow interior of the outlet header is in communication with the hollow interior of the heat transfer tubes. An access opening is cut through the inner wall of the inlet header at a location opposed to the heat transfer tubes, and cutting through an opposed side of the inner wall of the inlet header and the outlet header to form orifices to communicate the interior of the inlet header and the outlet header to the interior of the heat transfer tubes. The access openings are then closed, using the boss as the welding filler material.

A heat exchanger arrangement under this disclosure could be said to include an inlet header having a hollow interior defined by an inner wall. A plurality of heat transfer tubes have a hollow interior and extend away from the inlet header. An orifice communicates the inlet header interior to the interior of the heat transfer tubes. An outlet header has a hollow interior formed by an inner wall and an orifice communicates the hollow interior of outlet header to the heat transfer tubes. A diameter of the orifices is smaller than a diameter of the heat transfer tubes such that a portion of the heat transfer tube interior is blocked from communicating with the interior of the inlet header and the outlet header.

Although embodiments have been disclosed, however, a worker of ordinary skill in this art would recognize that modifications would come within the scope of this disclosure. For that reason, the following claims should be studied to determine the true scope and content of this disclosure.

## Claims

1. A method of forming a heat exchanger (100) comprising the steps of:
forming an inlet header (102) having a hollow interior (200) formed by a wall (103);
forming heat transfer tubes (108) of a diameter smaller than a diameter of the inlet header (102) and extending away from the inner wall (103) of the inlet header (102), the heat transfer tubes (108) having a hollow interior, with the hollow interior (200) of the inlet header (102) being blocked from communication with the hollow interior (200) of the heat transfer tubes (108);
forming an outlet header (104) having a hollow interior (200) formed by a wall (103), the outlet header (104) formed at an opposed end of the inlet header (102), and the hollow interior (200) of the outlet header (104) being in communication with the hollow interior of the heat transfer tubes (108);
cutting access openings (138) through the wall (103) of the inlet header (102) at a location opposed to the heat transfer tubes (108), and cutting through an opposed side of the wall (103) of the inlet header (102) to form orifices (140) to communicate the interior (200) of the inlet header (102) to the interior of the heat transfer tubes (108);
then closing the access openings (138).

2. The method as set forth in claim 1, wherein the cutting step is provided by laser drilling.

3. The method as set forth in claim 1, wherein the cutting is performed by a water jet.

4. The method as set forth in claim 1, wherein the cutting is provided by electro-discharge machining or wherein the cutting is performed by mechanical machining.

5. The method as set forth in any preceding claim, wherein there are a plurality of inlet headers (102) communicating with an inlet tube (101) to receive a fluid, and a plurality of outlet headers (104) communicating to an outlet tube (103).

6. The method as set forth in any preceding claim, wherein the inlet header (102) is provided with additional material (132) to facilitate the cutting through of the access openings (138).

7. The method as set forth in claim 6, wherein the access openings are closed using welding, the additional material (132) provided by a plurality of bosses (132), and the bosses (132) providing the melt pool to fill the access openings (138).

8. The method as set forth in any preceding claim, wherein the heat exchanger (100) is a micro-channel heat exchanger (100).

9. The method as set forth in any preceding claim, wherein the orifices (140) have a diameter smaller than the diameter of the heat transfer tubes (108) such that there is material (148) blocking a portion of the heat transfer tubes (108) from communicating with the interior (200) of the inlet header (102) and the outlet header (104).

10. The method as set forth in any preceding claim, wherein the inlet header (102), the heat transfer tubes (108) and the outlet header (104) are formed as a single part, optionally wherein the single part is formed by additive manufacturing.

11. A heat exchanger arrangement (100) comprising:
an inlet header (102) having a hollow interior (200) defined by a wall (103), and a plurality of heat transfer tubes (108) having a hollow interior and extending away from the inlet header (102), an orifice (140) communicating the inlet header interior (200) to the interior of the heat transfer tubes (108);
an outlet header (104) having a hollow interior (200) formed by a wall (103) and an orifice (140) communicating the hollow interior (200) of outlet header (104) to the heat transfer tubes (108); and
a diameter of the orifices (140) being smaller than a diameter of the heat transfer tubes (108) such that a portion of the heat transfer tube interior is blocked from communicating with the interior (200) of the inlet header (102) and the outlet header (104).

12. The heat exchanger as set forth in claim 11, wherein there are a plurality of the inlet headers (102) each communicating with a plurality of heat transfer tubes (108), optionally wherein the heat transfer tubes (108) communicate with a plurality of the outlet headers (104) at ends spaced from the inlet headers (102).

13. The heat exchanger as set forth in claim 11 or 12, wherein the inlet header (102) is adapted to be connected to receive a fluid to be heated, optionally wherein the fluid to be heated is compressed water.

14. The heat exchanger as set forth in any of claims 11 to 13, wherein the outlet header (102) is connected to a use of the heated compressed water as steam, and the use is in a combustor (56) of a gas turbine engine (20).

15. The heat exchanger as set forth in any of claims 11 to 14, wherein the inlet header (102), the outlet header (104) and the heat exchanger tubes (108) are formed as a single piece by additive manufacturing.
